Europäisches Patentamt

European Patent Office

Office européen des brevets

(11) Veröffentlichungsnummer: **0 221 448**
**B1**

(12) # EUROPÄISCHE PATENTSCHRIFT

(45) Veröffentlichungstag der Patentschrift:
27.09.89

(51) Int. Cl.⁴: **F 16 C 13/02**

(21) Anmeldenummer: **86114645.4**

(22) Anmeldetag: **22.10.86**

(54) Deformationsregelwalze.

(30) Priorität: **07.11.85 DE 3539428**

(43) Veröffentlichungstag der Anmeldung:
**13.05.87 Patentblatt 87/20**

(45) Bekanntmachung des Hinweises auf die Patenterteilung:
**27.09.89 Patentblatt 89/39**

(84) Benannte Vertragsstaaten:
**AT CH FR GB IT LI NL SE**

(56) Entgegenhaltungen:
**DE-A- 3 022 491**
**DE-A- 3 138 365**
**DE-B- 2 826 316**
**FR-A- 2 339 094**
**FR-A- 2 441 087**
**US-A- 4 440 077**

(73) Patentinhaber: **Kleinewefers GmbH,**
**Kleinewefersstrasse 25, D-4150 Krefeld 1 (DE)**

(72) Erfinder: **Pav, Josef, Dr., Eichhornstrasse 36 c,**
**D-4150 Krefeld (DE)**
Erfinder: **Wenzel, Reinhard, Glindholzstrasse 19,**
**D-4150 Krefeld (DE)**
Erfinder: **Rauf, Richard, Crön 10, D-4150 Krefeld (DE)**

(74) Vertreter: **Knoblauch, Ulrich, Dr.-Ing.,**
**Kühhornshofweg 10, D-6000 Frankfurt am Main 1 (DE)**

## Beschreibung

Die Erfindung bezieht sich auf eine Deformationsregelwalze, bei der ein Walzenmantel von einem drehfest gehaltenen Träger durchsetzt und mittels einer sich längs der Walze erstreckenden hydrostatischen Lagereinrichtung auf diesem abgestützt sowie nahe den Enden je mit einem Lagerring versehen ist, der gegen Drehung gesichert und relativ zum Träger in der Querschnittsebene, zumindest in Radialrichtung, verschiebbar ist, wobei zwischen dem Lagerring und dem von ihm umgebenen Abschnitt des Trägers ein Spielraum verbleibt und an der Innenfläche des Lagerrings eine durch ein Druckmittel hervorgerufene Kraft anzugreifen vermag.

Eine bekannte Deformationsregelwalze dieser Art (DE-PS 2 826 316) wirkt mit einer darunter befindlichen Gegenwalze zusammen. Die daher nach unten wirkende hydrostatische Lagereinrichtung besteht aus axial nebeneinander angeordneten hydrostatischen Lagerelementen, die je durch einen Druckgeber belastet sind. An der Innenfläche der beiden Lagerringe greifen Druckkolben an, um den Walzenmantel entgegen der Schwerkraft von der Gegenwalze abheben zu können. Bei einer anderen bekannten Walze (DE-C-3 138 365), die mit einer darüber befindlichen Gegenwalze zusammenarbeitet, greifen an der Innenfläche der Lagerringe Druckkolben an, welche das Eigengewicht des Walzenmantels und eventueller zusammen mit dem Mantel beweglicher Teile aufnehmen sollen, so daß dieses Gewicht bei der Regelung der Preßkräfte nicht mehr berücksichtigt zu werden braucht. In beiden Fällen steht der Spielraum mit dem Mantelinnenraum in Verbindung.

Da die Druckkolben den Lagerring singulär belasten, und ihrerseits den inneren Laufring eines Wälzlagers tragen, ergibt sich eine Verformung dieses Laufrings und damit eine Beeinträchtung des Wälzlagers, wenn größere Kräfte übertragen werden müssen.

Ferner ist eine Deformationsregelwalze bekannt (US-A-4 440 077), bei der der Walzenmantel an beiden Enden auf gestellfesten Lagern gehalten ist. In axialem Abstand hiervor befindet sich ein Stützring, der axial verschiebbar und um eine Achse schwenkbar am Träger gehalten ist. Zwischen dem Stützring und einer mit dem Walzenmantel umlaufenden Buchse ist ein Ringraum gebildet, der nach außen hin durch ringdichtungen abgedichtet und durch Dichtleisten in zwei Hälften unterteilt ist. Die so gebildeten Kammern können mit Drucköl gefüllt werden, um den Walzenmantel radial zu belasten. Die nutzbare Länge des Walzenmantelumfangs überlappt den Stützring über einen kleinen axialen Abschnitt.

Der Erfindung liegt die Aufgabe zugrunde, eine Deformationsregelwalze der eingangs beschriebenen Art anzugeben, bei der im Bereich des Lagerrings Kräfte und insbesondere große Kräfte übertragen werden können, ohne daß dies zu unzulässigen Flächenpressungen führt.

Diese Aufgabe wird erfindungsgemäß dadurch gelöst, daß der Spielraum an beiden Stirnseiten verschlossen und durch sich zwischen Träger und Lagerring erstreckende Dichtleisten in mindestens zwei Arbeitsräume unterteilt ist, von denen zumindest einer als aktive Druckkammer dient und mit einem Druckflüssigkeitsanschluß verbunden ist, und daß die nutzbare Länge des Umfangs des Walzenmantels den Lagerring zumindest teilweise überlappt und der Druck in der aktiven Druckkammer zur Beeinflussung der Streckenlast im Überlappungsbereich dient.

Dadurch daß der Spielraum ringsum abgeschlossen und mittels der Dichtleisten in Teilringbereiche aufgeteilt wird, erhält man aktive Druckkammern, die mit einer vorbestimmten Kraft auf den Lagerring und damit auf den Walzenmantel wirken, andererseits aber eine so große vom druck beaufschlagte Fläche haben, daß vergleichsweise geringe Drücke für die erstrebten Effekte ausreichen. Irgendwelche Beeinträchtigungen des Lagers, insbesondere eines Wälzlagers, sind daher nicht zu befürchten. Darüberhinaus ist es möglich, wesentlich größere Kräfte auf den Lagerring zu übertragen als es bisher zulässig war. Dies eröffnet eine Reihe von neuen Möglichkeiten der Walzenbelastung. Ferner kann die Länge des Walzenmantels wesentlich besser als bisher ausgenutzt werden. Dies ergibt ein geringeres Gewicht pro nutzbare Längeneinheit der Walze.

Insbesondere kann die aktive druckkammer auf der gleichen Seite des Trägers wie die hydrostatische Lagereinrichtung angeordnet sein (Primärdruckkammer). Auf diese Weise wird die Walzenschale an ihren Enden in ähnlicher Weise unterstützt wie durch ihre hydrostatische Lagereinrichtung. Die Primärdruckkammer bewirkt daher durch Aufbringung der aktiven Abstützkräfte eine wesentliche Verlängerung der Walzenmantelabstützung. Durch die Einstellung und Haltung des Druckniveaus in der Primärdruckkammer wird nicht nur die Streckenlast aufgebracht, sondern es werden auch die an den Walzenenden in der Belastungs- oder Arbeitsspaltebene störenden wirksame Verformungskräfte eliminiert, seien sie durch überhängende Gewichte, Antriebe usw. hervorgerufen. Weil sich die Primärdruckkammer über einen erheblichen Teil des Umfangswinkels des Lagerrings erstreckt, ergibt sich auch eine Lagerstabilisierung.

Eine andere Möglichkeit besteht darin, daß die aktive Druckkammer an der der hydrostatischen Lagereinrichtung gegenüberliegenden Seite des Trägers angeordnet ist (Sekundärkammer). Eine solche Sekundärdruckkammer kann in erster Linie dazu dienen, die Lage des Walzenmantels zu stabilisieren. Denn auch diese Sekundärdruckkammer erstreckt sich über einen erheblichen Umfangswinkel des Lagerrings, und daher versucht der in der Sekundärkammer wirkende Druck, den Lagerring und somit den Walzenmantel in die Mittellage zurückzuführen, also die Lage zu stabilisieren.

Besonders günstig ist die Stabilisierung durch die Primärdruckkammer oder die Sekundärdruckkammer, wenn die hydrostatische Lagereinrichtung axial nebeneinander angeordnete hydrostatische Lagerelemente aufweist, die je durch mindestens zwei in Umfangsrichtung versetzte Druckgeber belastet sind. Diese Lagereinrichtung hat ihrerseits eine gewisse Stabilisierungsfunktion, die durch die Primär- bzw. Sekundärdruckkammer ergänzt wird. Wenn die Sekundärdruckkammer wirksam ist, kann die Stabilisierungswirkung erhöht werden, weil die stabilisierenden Querkräfte von der Kraftsumme, die in der Belastungsebene wirkenden Kräfte dagegen durch die Kraftdifferenz bestimmt sind.

Bei einer abgewandelten Ausführungsform weist die hydrostatische Lagereinrichtung eine zwischen Träger und Walzenmantel befindliche und durch axiale Dichtleisten begrenzte Druckkammer auf (Hauptdruckkammer).

Zweckmäßigerweise ist der Druck in der aktiven Druckkammer einstellbar. Auf diese Weise läßt sich eine Anpassung an die betrieblichen Verhältnisse vornehmen.

Mit besonderem Vorteil sind eine aktive Primärdruckkammer und eine aktive Sekundärdruckkammer vorgesehen, und der Druck in der Primärdruckkammer hat einen höheren Wert als der Druck in der Sekundärdruckkammer. Durch die Aktivierung beider Druckkammern ergibt sich eine sichere Positionierung des Lagerringes mit bezug auf den zugehörigen Trägerabschnitt. Außerdem wird wegen der Druckdifferenz eine ausreichende Streckenlast in der Nähe des Lagerrings aufgebracht.

Günstig ist es ferner, wenn zwei aktive Druckkammern etwa symmetrisch zur Belastungsebene angeordnet sind (Tertiärdruckkammern). Hiermit lassen sich Veränderungen der Lage des Walzenmantels in Querrichtung besonders gut ausgleichen.

Die Tertiärdruckkammer kann beispielsweise zwischen Primär- und Sekundärdruckkammer angeordnet sein.

Eine andere Möglichkeit besteht darin, die Tertiärdruckkammern durch Teilung der Sekundärdruckkammer etwa in der Belastungsebene zu bilden.

Zu empfehlen sind Abstandssensoren, welche die Lage des Walzenmantels mit bezug auf den Träger quer zur Belastungsebene feststellen, zur Steuerung des Druckes in den Tertiärdruckkammern. Wenn diese Sensoren ansprechen, wird der Druck in den Tertiärdruckkammern geändert, so daß die ursprüngliche Lage wieder eingenommen wird.

Um eine besonders gute Dichtwirkung zu erzielen, können die Dichtleisten elastisch verformbar sein. Eine andere Möglichkeit besteht darin, daß die Dichtleisten in führungsschienen gehalten und durch Federkraft belastet sind. Es ist auch möglich, daß die Dichtleisten etwa senkrecht zur Belastungsebene am Trägerabschnitt gehalten sind und mit zur Belastungsebene parallelen Dichtflächen des Lagerrings zusammenwirken.

Vorteile bringt es, wenn die aktiven Druckkammern je mit einer Druckmittelzuleitung und einer Druckmittelableitung verbunden sind. Unter Aufrechterhaltung des gewünschten Drucks wird dann das Druckmittel in der aktiven Druckkammer fortwährend erneuert. Druckänderungen wirken sich praktisch sofort aus.

Konstruktiv empfiehlt es sich, daß der Lagerring einen Innenflansch besitzt, der den Spielraum nach außen hin verschließt. Es sind daher keine zusätzlichen Bauelemente für diesen Verschluß notwendig.

Das gleiche gilt, wenn der Träger eine Stufe aufweist, die den Spielraum nach außen hin verschließt. Eine Alternative besteht darin, daß eine mit dem Träger verbundene Ringscheibe, die mit Anschlägen am Lagerring zusammenwirkende Drehmomentstützen trägt, den Spielraum zum Mantelinneren hin verschließt. Hierbei hat die Ringscheibe eine Doppelfunktion.

Der Hub der aktiven Druckkammern braucht nicht groß zu sein. Er kann kleiner als 10 mm sein und vorzugsweise zwischen 2 und 5 mm liegen. Ein so geringer Hub reicht zum Öffnen des Walzenspaltes aus. Wegen der geringen Bewegungsstrecke benötigt man keine parallelen Dichtflächen, sondern kann auch Zylinderabschnitte als Dichtflächen benutzen.

Bei einer bevorzugten Ausführungsform ist dafür gesorgt, daß Stellvorrichtungen an den Trägerenden angreifen, um den Walzenmantel an eine Gegenwalze anzustellen und von ihr abzuheben, und daß eine Steuervorrichtung vorgesehen ist, die während der ersten Phase der Anstellbewegung die Primärdruckkammer bis zum Erreichen der Gegenwalze vollständig mit Druckflüssigkeit gefüllt hält und während der zweiten Phase der Anstellbewegung eine Teilentleerung der Primärdruckkammer, insbesondere eine Umfüllung in die Sekundärdruckkammer bewirkt. Im Hauptabschnitt der Anstellbewegung wird der Walzenmantel bis zur Gegenwalze transportiert. Im Endabschnitt vermag er sich der Gegenwalze genau anzupassen, so daß während der Schließbewegung im Endabschnitt eine genaue Parallelität der Walzen vorhanden ist.

Insbesondere kann die Steuervorrichtung so ausgebildet sein, daß sie schon während der ersten Phase die Druckräume der hydrostatischen Lagereinrichtung mit Druckflüssigkeit versorgt. Hierdurch wird der Walzenmantel in Richtung auf die Gegenwalze gewölbt. Die Walzen berühren einander beim Schließen des Walzenspaltes zuerst in der Mitte, so daß die im Walzenspalt vorhandene Warenbahn nicht beschädigt oder abgerissen wird.

Die Erfindung wird nachstehend anhand in der Zeichnung dargestellter, bevorzugter Ausführungsbeispiele näher erläutert. Es zeigen:

Fig. 1 einen Teillängsschnitt durch eine erfindungsgemäße Deformationsregelwalze,

Fig. 2 einen Querschnitt längs der Linie A-A der Fig. 1,

Fig. 3 einen Schnitt durch den Lagerring gemäß der Linie B-B der Fig. 1;

Fig. 4 einen Teillängsschnitt durch ein anderes Ausführungsbeispiel,

Fig. 5 einen Querschnitt entsprechend Fig. 2 durch ein drittes Ausführungsbeispiel,

Fig. 6 einen Teillängsschnitt entsprechend Fig. 4 mit zugehöriger Steuervorrichtung,

Fig. 7 in einem Schnitt entsprechend Fig. 3 eine weitere Abwandlung,

Fig. 8 in einem Schnitt entsprechend Fig. 3 eine Anordnung mit Tertiärdruckkammern,

Fig. 9 in einem Schnitt entsprechend Fig. 3 eine Abwandlung der Fig. 8 und

Fig. 10 bis 12 verschiedene Stellungen der Deformationsregelwalze während des Anstellens der Walze an eine Gegenwalze.

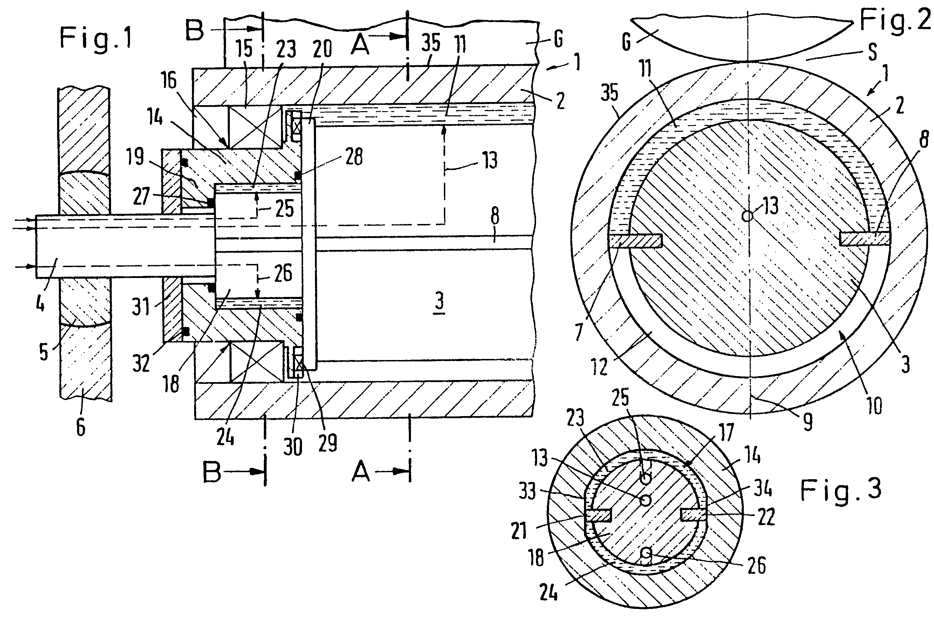

Bei der Ausführungsform der Fig. 1 bis 3 ist eine Deformationsregelwalze 1 veranschaulicht, die mit einer Gegenwalze G zusammenwirkt und einen Arbeitsspalt S bildet. Die Walze 1 weist einen Walzenmantel 2 auf, der von einem Träger 3 durchsetzt ist. Dieser ist mit seinen Enden 4 je über ein sphärisches Lager 5 in einem Ständer 6 drehfest gehalten.

Dichtleisten 7 und 8 erstrecken sich über den größten Teil der Länge des Trägers. Sie verlaufen in einer Durchmesserebene, die senkrecht zu der den Spalt S durchsetzenden Belastungsebene 9 verläuft. Hierdurch wird der Mantelinnenraum 10 in zwei Arbeitsräume 11 und 12 unterteilt. Der Arbeitsraum 11 kann über eine Leitung 13 mit Druckflüssigkeit versorgt werden und bildet daher eine Hauptdruckkammer, welche den Mantel 2 über dessen Länge gleichmäßig mit Druck belastet.

An den Enden der Walze 1 ist zwischen dem Walzenmantel 2 und einem Lagerring 14 ein Wälzlager 15 vorgesehen, das axiale und radiale Kräfte aufzunehmen vermag. Außerhalb des Wälzlagers ist eine Radialdichtung 16 vorgesehen. Der Lagerring 14 umgibt unter Freilassung eines Spielraumes 17 einen Trägerabschnitt 18. Der Spielraum ist nach außen hin durch einen Flansch 19 des Lagerringes 14 und zum Mantelinneren hin durch eine Ringscheibe 20 verschlossen. Der Trägerabschnitt 18 weist zwei Dichtleisten 21 und 22 in einer Ebene senkrecht zur Belastungsebene 9 auf, so daß der Spielraum 17 in zwei Arbeitsräume, nämlich eine Primärdruckkammer 23 und eine Sekundärdruckkammer 24 unterteilt ist. Beide Druckkammern können über Leitungen 25 bzw. 26 mit Druckflüssigkeit versorgt werden. Dichtungen 27 und 28 sorgen zusätzlich für den stirnseitigen Verschluß dieser Druckkammern 23 und 24.

Die Ringscheibe 20 trägt Drehmomentstützen 29, welche mit Anschlägen 30, hier Seitenwände von Nuten, am Lagerring 14 zusammenwirken, so daß dieser sich nicht gegenüber der mit dem Träger 3 verbundenen Abschlußplatte 31 dreht und daher die Dichtungen 32 nicht durch eine Rotation belastet sind.

Die Dichtleisten 21 und 22 sind fest in den Trägerabschnitt 18 eingesetzt und haben eine geringe Elastizität. Sie wirken mit ebenen Dichtflächen 33 und 34, die parallel zur Belastungsebene 9 verlaufen, zusammen.

Im Betrieb wird der Walzenmantel 2 durch die Druckflüssigkeit in der Hauptdruckkammer 11 und in den Primärdruckkammern 23 gegen die Gegenwalze G gedrückt. Der Druck in der Primärdruckkammer 23 ist unabhängig vom Druck in der Hauptdruckkammer 11 einstellbar und kann den Bedingungen am Walzenende genau angepaßt werden. Insbesondere erstreckt sich die nutzbare Länge der Arbeitsfläche 35 des Mantels 2 so weit bis zum Walzenende, daß sie das Lager 15 zumindest teilweise überlappt. Die Druckflüßigkeit in der Sekundärdruckkammer 24 sorgt für eine sichere Stabilisierung der Lage des Walzenmantels, weil nunmehr sowohl in Richtung auf die Gegenwalze G als auch in Gegenrichtung Druckkräfte jeweils über 180° wirken. Die gewünschte Streckenlast und die erforderlichen Stabilisierungskräfte lassen sich durch eine einfache Druckregelung aufbringen. Da an den Walzenenden die Differenz der Kräfte aus Primärdruckkammer 23 und Sekundärdruckkammer 24 wirkt, kann man jede gewünschte Stabilisierungskraft einstellen, ohne die Streckenlast im Lagerbereich zu ändern, indem die Drücke in beiden Druckkammern derart verändert werden, daß die Kraftdifferenz gleich bleibt. Bei alledem ist es möglich, den Walzenmantel 2 und den Lagerring 14 radial zum Träger 3 zu verstellen. In jeder gewünschten Stellung ergibt sich eine Stabilisierung oder Verblockung. Wichtig ist auch, daß die Druckkräfte in der Primärdruckkammer 23 so eingestellt werden können, daß überhängende Gewichte, beispielsweise durch Antriebe oder durch das Eigengewicht, derart ausgeglichen werden können, daß dies auf die Streckenlast keinen Einfluß hat.

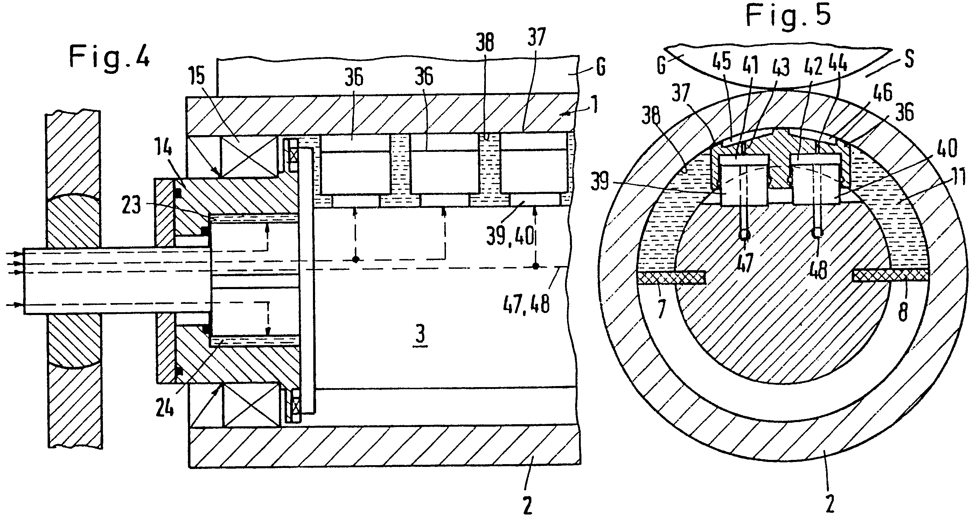

Die Ausführungsform der Fig. 4 unterscheidet sich von derjenigen der Fig. 1 bis 3 lediglich dadurch, daß als hydrostatische Lagereinrichtung nicht das Druckpolster in der Hauptdruckkammer 11 dient, sondern eine Reihe von nebeneinander angeordneten Lagerelementen 36, die mit einer hydrostatischen Lagerfläche 37 gegen die Innenumfangsfläche 38 des Walzenmantels mit Hilfe von Druckgebern 39, 40 gehalten sind. Derartige Lagerelemente sind beispielsweise aus DE-OS 3 022 491 bekannt und werden auch beim Ausführungsbeispiel der Fig. 5 verwendet. Jeder Druckgeber besteht aus einem Kolben und einem Zylinder und weist einen Druckraum 41 bzw. 42 auf, der über eine Drossel 43 bzw. 44 mit einer Lagertasche 45 bzw. 46 verbunden ist. Druckflüssigkeit wird über Leitungen 47, 48 zugeleitet.

Mit diesen Lagerelementen läßt sich die Streckenlast an jeder Stelle der Walzenlänge sehr genau einstellen. Mit Hilfe der Primärdruckkammer 23 ergibt sich diese Einstellmöglichkeit bis an das Walzenende. Die Lagerelemente 36 ergeben in Verbindung mit der Sekundärdruckkammer eine besonders gute Stabilisierung der Walzenlage.

Bei der Ausführungsform nach Fig. 5 werden als hydrostatische Lagereinrichtung gleichzeitig Lagerelemente 36 und ein Druckpolster in der Hauptdruckkammer 11 verwendet. Dies hat den Vorteil, daß mit einem verhältnismäßig geringen Druck in der Hauptdruckkammer 11 und in der Primärdruckkammer 23 der Hauptteil der Streckenlast aufgebracht werden kann, während dem Druckgeber 39, 40 ein solcher Druck zugeführt wird, daß die erforderlichen Korrekturen erfolgen.

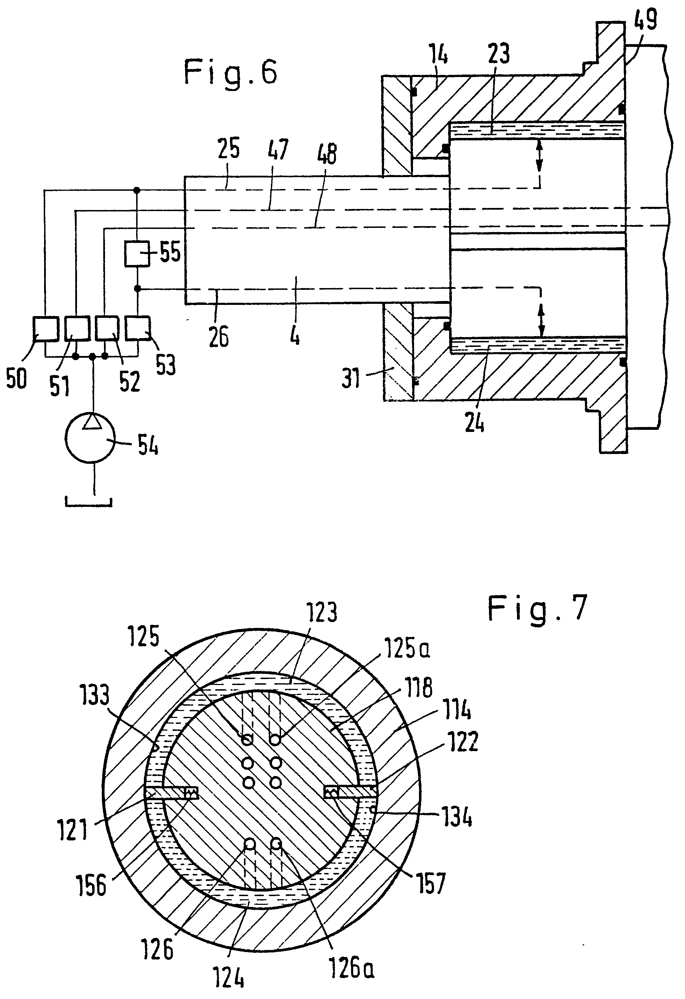

In Fig. 6 sind Lagerring 14 und Träger 3 herausgezeichnet. Der Unterschied gegnüber Fig. 4 besteht darin, daß der Träger mit einer Stufe 49 den Primärdruckraum 23 und den Sekundärdruckraum 24 stirnseitig abdichtet. Ferner ist veranschaulicht, daß die Druckflüssigkeitsanschlußleitungen 25, 26, 47 und 48 je zu einem Regler, hier die Druckregelventile 50 bis 53 führen, die alle von einer gemeinsamen Pumpe 54 versorgt werden. Die Druckregelventile halten in den einzelnen Druckräumen bzw. Druckkammern einen bestimmten Druck aufrecht und lassen sich manuell oder in Anhängigkeit von einer bekannten Regelung, welche Daten der im Walzenspalt S zu behandelnden Bahnen, Positionswerte des Walzenmantels, Druck- und Temperaturwerte und dgl. berücksichtigt, verstellen. Ferner ist ein Druckdifferenzregler 55 vorgesehen, mit dessen Hilfe der Druck in der Leitung 26 um einen vorbestimmten Wert unterhalb des Drucks in der Leitung 25 gehalten werden kann, wenn dies gewünscht wird. In einem solchen Fall kann das Druckregelventil 53 stillgelegt werden.

Bei der Ausführungsform nach Fig. 7 sind für entsprechende Teile um 100 gegenüber den zuvor beschriebenen Ausführungsbeispielen erhöht. Die Dichtleisten 121 und 122 wirken mit zylindrischen Dichtflächen 133 und 134 zusammen. Die Dichtleisten stehen unter der Wirkung einer Feder 156 bzw. 157, so daß sie bei einer vertikalen Verschiebung des Lagerelements 114 geringfügig nach innen zurückgeschoben werden können. Außerdem ist veranschaulicht, daß sowohl die Primärdruckkammer 123 mit zwei Anschlußleitungen 125 und 125a als auch die Sekundärdruckkammer 124 mit zwei Anschlußleitungen 126 und 126a versehen ist, so daß die Druckflüssigkeit unter Aufrechterhaltung des Drucks zirkulieren kann und daher rasche Druck- und Volumenänderungen in den beiden Druckkammern erfolgen können.

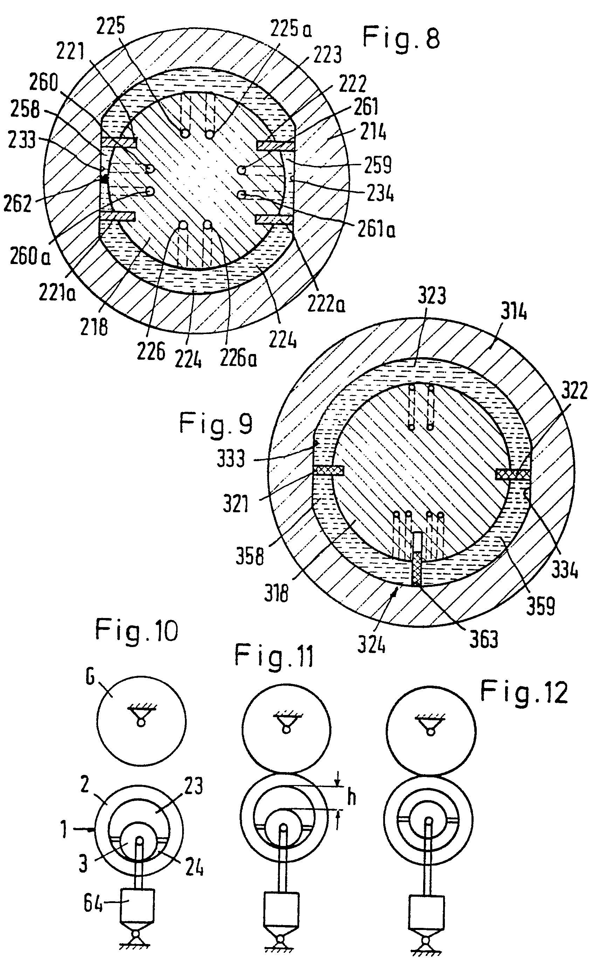

Bei der Ausführungsform nach Fig. 8 werden um 200 erhöhte Bezugszeichen für entsprechende Teile verwendet. Zwischen Lagerring 214 und Trägerabschnitt 218 gibt es nicht nur ein Primärdruckkammer 223 und eine Sekundärdruckkammer 224. Vielmehr sind noch zwei Tertiärdruckkammern 258 und 259 vorgesehen. Aus diesem Grund gibt es insgesamt vier Dichtleisten 221, 221a, 222 und 222a, die paarweise mit parallelen Dichtflächen 233 und 234 zusammenwirken. Diese Tertiärdruckkammern sind mit Anschlußleitungen 260, 260a bzw. 261, 261a für die Druckflüssigkeitszirkulation versehen.

Wenn sich der Walzenmantel unter dem Einfluß von Querkräfte quer zum Träger bewegt, wird diese Verlagerung mit Hilfe von mindestens einem Abstandssensor 262 festgestellt. Dieser ist in Fig. 8 in die Tertiärdruckkammer 258 eingesetzt. Er kann aber auch außerhalb der Walze zwischen einem mit dem Lagerring 214 verbundenen Element und einem mit dem Trägerabschnitt 218 verbundenen Element angeordnet sein. Auch in der Tertiärdruckkammer 259 kann sich ein solcher Abstandssensor befinden. Der Druck in den Tertiärdruckkammern 258 und 259 wird so eingeregelt, daß der Lagerring 214 und damit der Walzenmantel die zentrische Lage beibehalten.

Das gleiche Ergebnis läßt sich mit der Konstruktion nach Fig. 9 erreichen, bei der für entsprechende Teile um 300 erhöhte Bezugszeichen benutzt werden. Hier steht einer Primärdruckkammer 323 eine durch eine Dichtleiste 363 unterteilte Sekundärdruckkammer gegenüber, die demnach in zwei Tertiärdruckkammern 358 und 359 unterteilt ist. Der Druck in diesen Tertiärdruckkammern wird so eingeregelt, daß sowohl den Bedingungen der Stabilisierung in der Belastungsebene als auch quer dazu Genüge geleistet wird.

Die Fig. 10 bis 12 veranschaulichen einen Anstellvorgang. Der Trager 3 ist an beiden Enden mit einer Hydraulischen Stellvorrichtung 64 versehen. Die Primärdruckkammer 23 und die Sekundärdruckkammer 24 sind lediglich schematisch veranschaulicht. Unter dem Einfluß der die Regler 50 bis 55 aufweisenden Steuervorrichtung wird zu Beginn des Anstellvorganges Druckflüssigkeit in die Primärdruckkammern 23 und in die Druckkammer 11 und/oder 41, 42 der Lagereinrichtung geleitet. Der Walzenmantel 2 nimmt dann die in Fig. 10 veranschaulichte Stellung ein, wobei der durch einen bestimmten Druck bzw. eine Streckenlast in Richtung auf die Gegenwalze gewölbt wird. Durch Betätigung der Stellvorrichtung 64 wird die Walze 1 gegen die Gegenwalze G gefahren (Fig. 11), die der Walzenmantel 2 zuerst in der Mitte berührt. Eine im Spalt vorhandene Warenbahn wird daher nicht beschädigt, wenn der Walzenmantel weiter an die Gegenwalze gedrückt wird, bis die beiden Walzen genau parallel zueinander verlaufen. Die weitere Verstellung mittels der Stellvorrichtung 64 erfolgt unter gleichzeitiger Verkleinerung der Primärdruckkammer 23 und Vergrößerung der Sekundärdruckkammer 24, wie es Fig. 12 zeigt. Nunmehr kann die Streckenlast über die Lagerelemente 36 bzw. das Druckpolster in der Hauptdruckkammer 11 beliebig eingestellt werden.

Der Hub h kann sehr klein sein. Er braucht nicht größer als 10 mm zu sein. In der Regel genügen 2 bis 5 mm.

Wegen des ganz kurzen Hubwegs ist die Einhaltung der Parallelität der zusammenarbeitenden Walzenmantellinien beim Schließen des Arbeitsspaltes einfach und präzise zu erreichen. Außerdem kann der Walzenmantel mit einem entsprechend kleine Innen- und Außendurchmesser und daher mit geringem Eigengewicht hergestellt werden. Ferner wird die Steifigkeit des Walzenmantels herabgesetzt und seine Verformbarkeit erhöht. Dementsprechend wird die Steuerungs- bzw. Regelungsfähigkeit der Streckenlast im Arbeitsspalt, die über den Walzmantel eingeleitet wird, erhöht. Die Flächenpressung kann, entsprechend der Minderung des Walzenmanteldurchmessers (Herz'sche Pressung) bei gleichbleibender Streckenlast erhöht werden. Der Walzenmantel und die gesamte Walze erhalten durch diese Maßnahmen ideale Stellgliedeigenschaften.

## Patentansprüche

1. Deformationsregelwalze, bei der ein Walzenmantel (2) von einem drehfest gehaltenen Träger (3) durchsetzt und mittels einer sich längs der Walze erstreckenden hydrostatischen Lagereinrichtung (11) auf diesem abgestützt sowie nahe den Enden je mit einem Lagerring (14; 114; 214; 314) versehen ist, der gegen Drehung gesichert und relativ zum Träger (3) in der Querschnittsebene, zumindest in Radialrichtung, verschiebbar ist, wobei zwischen dem Lagerring (14; 114; 214; 314) und dem von ihm umgebenen Abschnitt des Trägers ein Spielraum (17) verbleibt und an der Innenfläche des Lagerrings eine durch ein Druckmittel hervorgerufene Kraft anzugreifen vermag, dadurch gekennzeichnet, daß der Spielraum (17) an beiden Stirnseiten verschlossen und durch sich zwischen Träger (3) und Lagerring (14; 114; 214; 314) erstreckende Dichtleisten (21, 22; 121, 122; 221, 221a, 222, 222a; 321, 322 363) in mindestens zwei Arbeitsräume unterteilt ist, von denen zumindest einer als aktive Druckkammer (23, 24; 123, 124; 223, 224; 258, 259; 323, 358, 359) dient und mit einem Druckflüssigkeitsanschluß (25, 26; 125, 125a, 126, 126a, 225, 225a, 226, 226a, 260, 260a, 261, 261a) verbunden ist und daß die nutzbare Länge des Umfangs (35) des Walzenmantels (2) den Lagerring (14) zumindest teilweise überlappt und der Druck in der aktiven Druckkammer zur Beeinflussung der Streckenlast im Überlappungsbereich dient.

2. Deformationsregelwalze nach Anspruch 1, dadurch gekenzeichnet, daß die aktive Druckkammer (23; 123; 223; 323) auf der gleichen Seite des Trägers (3) wie die hydrostatische Lagereinrichtung angeordnet ist (Primärdruckkammer).

3. Deformationsregelwalze nach Ansprüch 1 oder 2, dadurch gekennzeichnet, daß die aktive Druckkammer (24; 124; 224; 324) an der der hydrostatischen Lagereinrichtung gegenüberliegenden Seite des Trägers (3) angeordnet ist (Sekundärdruckkammer).

4. Deformationsregelwalze nach einem der Ansprüche 1 bis 3, dadurch gekennzeichnet, daß die hydrostatische Lagereinrichtung axial nebeneinander angeordnete hydrostatische Lagerelemente (36) aufweist, die je durch mindestens zwei in Umfangsrichtung versetzte Druckgeber (39, 40) belastet sind.

5. Deformationsregelwalze nach einem der Ansprüche 1 bis 4, dadurch gekennzeichnet, daß die hydrostatische Lagereinrichtung eine zwischen Träger (3) und Walzenmantel (2) befindliche und durch axiale Dichtleisten (7, 8) begrenzte Druckkammer (11) aufweist (Hauptdruckkammer).

6. Deformationsregelwalze nach einem der Anspüche 1 bis 5, dadurch gekennzeichnet, daß der Druck in der aktiven Druckkammer einstellbar ist.

7. Deformationsregelwalze nach einem der Ansprüche 1 bis 6, dadurch gekennzeichnet, daß eine aktive Primärdruckkammer (23; 123; 223; 323) und eine aktive Sekundärdruckkammer (24; 124; 224; 324) vorgesehen sind, und daß der Druck in der Primärdruckkammer einen höheren Wert als der Druck in der Sekundärdruckkammer hat.

8. Deformationsregelwalze nach einem der Ansprüche 1 bis 7, dadurch gekennzeichnet, daß zwei aktive Druckkammern (258, 259; 358, 359) etwa symmetrisch zur Belastungsebene (9) angeordnet sind (Tertiärdruckkammern).

9. Deformationsregelwalze nach Anspruch 8, dadurch gekennzeichnet, daß die Tertiärdruckkammern (258, 259) zwischen den Primär- und Sekundärdruckkammern (223, 224) angeordnet sind).

10. Deformationsregelwalze nach Anspruch 8, dadurch gekennzeichnet, daß die Tertiärdruckkammern (358, 359) durch Teilung der Sekundärdruckkammer (324) etwa in der Belastungsebene (9) gebildet sind.

11. Deformationsregelwalze nach einem der Ansprüche 8 bis 10, gekennzeichnet durch Abstandssensoren (262), welche die Lage des Walzenmantels (2) mit bezug auf den Träger (3) quer zur Belastungsebene (9) feststellen, zur Steuerung des Druckes in den Tertiärdruckkammern (258, 259; 358, 359).

12. Deformationsregelwalze nach einem der Ansprüche 1 bis 11, dadurch gekennzeichnet, daß die Dichtleisten (121, 122) elastisch verformbar sind.

13. Deformationsregelwalze nach einem der Ansprüche 1 bis 12, dadurch gekennzeichnet, daß die Dichtleisten (121, 122) in Führungsschienen gehalten und durch Federkraft belastet sind.

14. Deformationsregelwalze nach einem der Ansprüche 1 bis 13, dadurch gekennzeichnet, daß die Dichtleisten (21, 22; 221, 221a; 222, 222a; 321, 322) etwa senkrecht zur Belastungsebene am Trägerabschnitt gehalten sind und mit zur Belastungsebene (9) parallelen Dichtflächen (33, 34; 233, 234; 333, 334) des Lagerrings zusammenwirken.

15. Deformationsregelwalze nach einem der Ansprüche 1 bis 14, dadurch gekennzeichnet, daß die aktiven Druckkammern (123, 124; 223, 224, 258, 259; 323, 358, 359) je mit einer Druckmittelzuleitung und einer Druckmittelableitung verbunden sind.

16. Deformationsregelwalze nach einem der Ansprüche 1 bis 15, dadurch gekennzeichnet, daß der Lagerring (14) einen Innenflansch (19) besitzt, der den Spielraum (17) nach außen hin verschließt.

17. Deformationsregelwalze nach einem der Ansprüche 1 bis 16, dadurch gekennzeichnet, daß der Träger (3) eine Stufe (49) aufweist, die den Spielraum (17) zum Mantelinneren hin verschließt.

18. Deformationsregelwalze nach einem der Ansprüche 1 bis 16, dadurch gekennzeichnet, daß eine mit dem Träger (3) verbundene Ringscheibe (20), die mit Anschlägen (30) am Lagerring (14) zusammenwirkende Drehmomentstützen (29) trägt, den Spielraum (17) zum Mantelinneren hin verschließt.

19. Deformationsregelwalze nach einem der Ansprüche 1 bis 18, dadurch gekennzeichnet, daß der Hub (h) der aktiven Druckkammer (23, 24) kleiner als 10 mm ist und vorzugsweise zwischen 2 und 5 mm liegt.

20. Deformationsregelwalze nach einem der Ansprüche 1 bis 19, dadurch gekennzeichnet, daß Stellvorrichtungen (64) an den Trägerenden angreifen, um den Walzenmantel (2) an eine Gegenwalze (G) anzustellen und von ihr abzuheben, und daß eine Steuervorrichtung (50 bis 55) vorgesehen ist, die während der ersten Phase der Anstellbewegung die Primärdruckkammer (23) bis zum Erreichen der Gegenwalze vollständig mit Druckflüssigkeit gefüllt hält und während der zweiten Phase der Anstellbewegung eine Teilentleerung der Primärdruckkammer bewirkt.

21. Deformationsregelwalze nach Anspruch 20, dadurch gekennzeichnet, daß die Steuervorrichtung (50 bis 55) so ausgebildet ist, daß sich während der zweiten Phase eine Umfüllung der Primärdruckkammer (23) in die Sekundärdruckkammer (24) bewirkt.

22. Deformationsregelwalze nach Anspruch 20 oder 21, dadurch gekennzeichnet, daß die Steuervorrichtung (50 bis 55) so ausgebildet ist, daß sie schon während der ersten Phase die Druckräume (Hauptdruckkammer 11, Lägerelement-Druckräume 41, 42) der hydrostatischen Lagereinrichtung mit Druckflüssigkeit versorgt.

**Claims**

1. Roll with deformation control, in which a roll shell (2) is penetrated by a bracket (3) held firmly in rotation and is supported against the latter by means of a hydrostatic bearing device (11) extending along the roll and is provided near each of its ends with a bearing ring (14; 114; 214; 314) which is secured against rotation and is slidable relative to the bracket (3) in the cross sectional plane, at least in the radial direction, a free space (17) remaining between the bearing ring (14; 114; 214; 314) and the section of the bracket which it encloses and a force generated by a pressurized medium being able to engage the inner surface of the bearing ring, characterized in that the free space (17) is closed at both end faces and is subdivided by packing strips (21, 22; 121, 122; 221, 221a, 222, 222a; 321, 322, 363) which extend between bracket (3) and bearing ring (14; 114; 214; 314) into at least two working spaces, at least one of which serves as active pressure chamber (23, 24; 123, 124; 223, 224; 258, 259; 323, 358, 359) and is connected to a pressurized fluid terminal (25, 26; 125, 125a, 126, 126a, 225, 225a, 226, 226a, 260, 260a, 261, 261a), and in that the effective length of the circumference (35) of the roll shell (2) overlaps the bearing ring (14) at least partially and the pressure in the active pressure chamber serves to control the line load in the overlap region.

2. Roll with deformation control according to Claim 1, characterized in that the active pressure chamber (23; 123; 223; 323) is arranged on the same side of the bracket (3) as the hydrostatic bearing device (primary pressure chamber).

3. Roll with deformation control according to either Claim 1 or 2, characterized in that the active pressure chamber (24; 124; 224; 324) is arranged on the opposite side of the bracket (3) to the hydrostatic bearing device (secondary pressure chamber).

4. Roll with deformation control according to one of Claims 1 to 3, characterized in that the hydrostatic bearing device exhibits hydrostatic bearing elements (36) arranged axially side by side which are each loaded by at least two pressure transducers (39, 40) staggered in the circumferential direction.

5. Roll with deformation control according to one of Claims 1 to 4, characterized in that the hydrostatic bearing device exhibits a pressure chamber (11) located between bracket (3) and roll shell (2) and delimited by axial packing strips (7, 8) (main pressure chamber).

6. Roll with deformation control according to one of Claims 1 to 5, characterized in that the pressure in the active pressure chamber is adjustable.

7. Roll with deformation control according to one of Claims 1 to 6, characterized in that an active primary pressure chamber (23; 123; 223; 323) and an active secondary pressure chamber (24; 124; 224; 324) are provided and that the pressure in the primary pressure chamber has a higher value than the pressure in the secondary pressure chamber.

8. Roll with deformation control according to one of Claims 1 to 7, characterized in that two active pressure chambers (258, 259; 358, 359) are arranged somewhat symmetrically to the load plane (9) (tertiary pressure chambers).

9. Roll with deformation control according to Claim 8, characterized in that the tertiary pressure chambers (258, 259) are arranged between the primary and secondary pressure chambers (223, 224).

10. Roll with deformation control according to Claim 8, characterized in that the tertiary pressure chambers (358, 359) are formed by division of the secondary pressure chamber (324) somewhat in the load plane (9).

11. Roll with deformation control according to one of Claims 8 to 10, characterized by distance sensors (262) which determine the position of the roll shell (2) relative to the bracket (3) transversely to the load plane (9) in order to control the pressure in the tertiary pressure chambers (258, 259; 358, 359).

12. Roll with deformation control according to one of Claims 1 to 11, characterized in that the packing strips (121, 122) are resiliently deformable.

13. Roll with deformation control according to one of Claims 1 to 12, characterized in that the packing strips (121, 122) are held in guide rails and loaded by spring force.

14. Roll with deformation control according to one of Claims 1 to 13, characterized in that the packing strips (21, 22; 221, 221a, 222, 222a; 321, 332) are held on the bracket section somewhat at right angles to the load plane and cooperate with sealing surfaces (33, 34; 233, 234; 333, 334) of the bearing ring parallel to the load plane (9).

15. Roll with deformation control according to one of Claims 1 to 14, characterized in that the active pressure chambers (123, 124; 223, 224, 258, 259; 323, 358, 359) are each connected to a pressurized medium supply line and to a pressurized medium discharge line.

16. Roll with deformation control according to one of Claims 1 to 15, characterized in that the bearing ring (14) has an inner flange (19) which closes the free space (17) towards the outside.

17. Roll with deformation control according to one of Claims 1 to 16, characterized in that the bracket (3) exhibits a step (49) which closes the free space (17) towards the inside of the roll.

18. Roll with deformation control according to one of Claims 1 to 16, characterized in that an annular disc (20) connected to the bracket (3), carrying torque supports (29) which cooperate with stops (30) on the bearing ring (14), closes the free space (17) towards the inside of the shell.

19. Roll with deformation control according to one of Claims 1 to 18, characterized in that the stroke (h) of the active pressure chamber (23, 24) is smaller than 10 mm and is preferably between 2 and 5 mm.

20. Roll with deformation control according to one of Claims 1 to 19, characterized in that adjusting devices (64) engage the bracket ends in order to approach the roll shell (2) to a counterrol (G) and to lift it from the latter, and that a control device (50 to 55) is provided which keeps the primary pressure chamber (23) completely full of pressurized fluid during the first phase of the approach movement until the counterrol is reached, and effects a partial emptying of the primary pressure chamber during the second phase of the approach movement.

21. Roll with deformation control according to Claim 20, characterized in that the control device (50 to 55) is constructed so that a transfer from the primary pressure chamber (23) into the secondary pressure chamber (24) is effected during the second phase.

22. Roll with deformation control according to Claim 20 or 21, characterized in that the control device (50 to 55) is constructed so that it supplies the pressure spaces (main pressure chamber 11, bearing element pressure spaces 41, 42) of the hydrostatic bearing device with pressurized fluid even during the first phase.

**Revendications**

1. Rouleau à réglage de la déformation sur lequel une enveloppe de rouleau (2) est traversée par un support (3) maintenu bloqué en rotation, est appuyée sur celui-ci au moyen d'un dispositif d'appui (11) hydrostatique s'étendant le long du rouleau et est pourvue près de chacune des extrémités d'une bague de palier (14; 114; 214; 314) qui l'assure contre la rotation et est en outre mobile par rapport au support (3) dans le plan de la section, du moins en direction radiale, avec un intervalle de jeu (17) qui subsiste entre la bague d'appui (14; 114; 214; 314) et le segment du support entouré par celle-ci, tandis qu'une force produite par un agent de pression est en mesure d'attaquer la face intérieure de la bague d'appui, caractérisé en ce que l'intervalle de jeu (17) est fermé sur les deux faces frontales et est divisé par des cloisons d'étanchéité (21, 22; 121, 122; 221, 221a, 222, 222a; 321, 322, 363) s'étendant entre le support (3) et la bague de palier (14; 114; 214; 314) en au moins deux chambres de travail dont l'une au moins sert de chambre de compression active (23, 24; 123, 124; 223, 224; 258, 259; 323, 358, 359) et est reliée à un raccord de liquide sous pression (25, 26; 125, 125a, 126, 126a, 225, 225a, 226, 226a, 260, 260a, 261, 261a) et en ce que la longueur utile du pourtour (35) de l'enveloppe de rouleau (2) recouvre au moins en partie la baque de palier et en ce que la pression dans la chambre de compression active sert pour intervenir sur la charge de l'intervalle dans la zone de recouvrement.

2. Rouleau à réglage de la déformation selon la revendication 1, caractérisé en ce que la chambre de compression active (23; 123; 223; 323) est disposée sur le même côté du support (3) que le dispositif d'appui hydrostatique (chambre de compression primaire).

3. Rouleau à réglage de la déformation selon la revendication 1 ou 2, caractérisé en ce que la chambre de compression active (24; 124; 224; 324) est disposée sur le côté du support (3) opposé au dispositif d'appui hydrostatique (chambre de compression secondaire).

4. Rouleau à réglage de la déformation selon l'une des revendication 1 à 3, caractérisé en ce que le dispositif d'appui hydrostatique présente des éléments d'appui (36) disposés côte à côte axialement qui sont respectivement soumis à la charge d'au moins deux transmetteurs de pression 39, 40 décalés en direction périphérique.

5. Rouleau à réglage de la déformation selon l'une des revendications 1 à 4, caractérisé en ce que le dispositif d'appui hydrostatique présente une chambre de compression (11) située entre le support (3) et l'enveloppe du rouleau (2) et délimitée par des cloisons d'étanchéité axiales (7, 8).

6. Rouleau à réglage de la déformation selon l'une des revendications 1 à 5, caractérisé en ce que la pression est réglable dans la chambre de compression active.

7. Rouleau à réglage de la déformation selon l'une des revendications 1 à 6, caractérisé en ce qu'il est prévu une chambre de compression primaire active (23; 123; 223; 323) et une chambre de compression secondaire active (24; 124; 224; 324) et en ce que la pression dans la chambre de compression primaire a une valeur plus élevée que dans la chambre de compression secondaire.

8. Rouleau à réglage de la déformation selon l'une des revendications 1 à 7, caractérisé en ce que deux chambres de compression actives (258, 259; 358, 359) sont disposées de manière sensiblement symétrique par rapport au plan de charge (9) (chambre de compression tertiaires).

9. Rouleau à réglage de la déformation selon la revendication 8, caractérisé en ce que les chambres de compression tertiaires (258, 259) sont disposées entre les chambres de compression primaire et secondaire (223, 224).

10. Rouleau à réglage de la déformation selon la revendication 8, caractérisé en ce que les chambres de compression tertiaires (358, 359) sont constituées en divisant la chambre de compression secondaire (324) approximativement dans le plan de charge (9).

11. Rouleau à réglage de la déformation selon l'une des revendications 8 à 10, caractérisé par des capteurs de déplacement (262) qui déterminent la position de l'enveloppe du rouleau (2) par rapport au support (3) transversalement au plan de charge (9) pour le contrôle de la pression dans les chambres de compression tertiaires (258, 259; 358, 359).

12. Rouleau à réglage de la déformation selon l'une des revendications 1 à 11, caractérisé en ce que les cloisons d'étanchéité (121, 122) sont déformables élastiquement.

13. Rouleau à réglage de la déformation selon l'une des revendications 1 à 12, caractérisé en ce que les cloisons d'étanchéité (121, 122) sont maintenues dans des glissières de guidage et sont chargées par un ressort.

14. Rouleau à réglage de la déformation selon l'une des revendications 1 à 13, caractérisé en ce que les cloisons d'étanchéité (21, 22; 221, 221a; 222, 222a; 321, 322) sont maintenues sensiblement perpendiculaires au plan de charge du segment de support et sont associées à des surfaces de contact (33, 34; 233, 234; 333, 334) de la bague de palier parallèles au plan de charge (9).

15. Rouleau à réglage de la déformation selon l'une des revendications 1 à 14, caractérisé en ce que les chambres de compression actives (123, 124; 223, 224; 258, 259; 323, 358, 359) sont respectivement reliées à une arrivée d'agent de pression et à une sortie d'agent de pression.

16. Rouleau à réglage de la déformation selon l'une des revendications 1 à 15, caractérisé en ce que la bague de palier (14) posséde un rebord intérieur

(19) qui obture vers l'intérieur l'intervalle de jeu (17).

17. Rouleau à réglage de la déformation selon l'une des revendications 1 à 16, caractérisé en ce que le support (3) présente un gradin (49) qui obture l'intervalle de jeu (17) vers l'intérieur de l'enveloppe.

18. Rouleau à réglage de la déformation selon l'une des revendications 1 à 16, caractérisé en ce qu'un disque annulaire (20) relié au support (3) qui porte des appuis de couple de rotation (29) associés à des butées (30) de la bague de palier (14), obture l'intervalle de jeu (17) vers l'intérieur de l'enveloppe.

19. Rouleau à réglage de la déformation selon l'une des revendications 1 à 18, caractérisé en ce que la course des chambres de compression actives (23, 24) est inférieure à 10 mm et se situe de préférence entre 2 et 5 mm.

20. Rouleau à réglage de la déformation selon l'une des revendications 1 à 19, caractérisé en ce que les dispositifs de réglage (64) attaquent les extrémités du support pour appuyer l'enveloppe du rouleau (2) sur un rouleau opposé (G) et le décoller de celui-ci et en ce qu'il est prévu un dispositif de commande (50 à 55) qui, pendant la première phase du mouvement d'appui, maintient la chambre de pression primaire (23) entièrement remplie de liquide sous pression jusqu'à ce que le rouleau opposé soit attient et qui, pendant la deuxième phase du mouvement d'appui, provoque un vidage partiel de la chambre de compression primaire.

21. Rouleau à réglage de la déformation selon la revendication 20, caractérisé en ce que le dispositif de commande (50 à 55) est constitué de manière à ce que se produise pendant la deuxième phase un transvasement de la chambre de compresseur primaire (23) dans la chambre de compression secondaire (24).

22. Rouleau à réglage de la déformation selon la revendication 20 ou 21, caractérisé en ce que le dispositif de commande (50 à 54) est constitué de manière à déjà alimenter en liquide sous pression pendant la première phase les compartiments de pression (chambre de compression principale 11, chambre de compression des éléments d'appui 41, 42) du dispositif d'appui hydrostatique.

Fig.1

Fig.2

Fig.3

EP 0 221 448 B1

Fig.4

Fig.5

15  36  36  38  37  G

1

14

23

47,48

39,40

24

3

2

G  45 41 43 42 44  S

37  46

38  36

39  40

11

7  47  48  8

2

EP 0 221 448 B1

# Fig.6

# Fig.7

Fig. 8

Fig. 9

Fig. 10

Fig. 11

Fig. 12